# EUROPEAN PATENT SPECIFICATION

(11) **EP 2 085 673 B1**
(45) Date of publication and mention of the grant of the patent: **24.11.2010**
(21) Application number: 08075072.2
(22) Date of filing: 30.01.2008
(51) Int. Cl.: F16L 21/03

(54) **Pipe joint structure**
Rohrverbindungsstruktur
Structure de raccord de tuyau

(43) Date of publication of application: 05.08.2009
(73) Proprietor: Wavin B.V., 8011 CW Zwolle (NL)
(72) Inventor: Vos, Bastiaan, 9406 VA Assen (NL); van Dijk, Berend Jan, 7777 St Schuinesloot (NL); Boer, Hans, 7772 AK Hardenberg (NL)
(74) Representative: van Bouwelen, Franciscus Maria

(56) References cited:
- DE-B3- 10 321 301
- GB-A- 2 022 747
- US-A1- 2004 124 635

## Description

The invention relates to a pipe joint structure comprising a socket member with an end edge which is adapted for accommodating a spigot end of a pipe, the socket member including a wall in which a circumferential sealing ring groove is provided, and a sealing ring at least partly disposed in the circumferential sealing ring groove which, when the spigot end has been accommodated in the socket member, is in a compressed sealing state to seal the joint between the socket member and the spigot end.

Such a pipe joint structure in which the socket member is formed by a coupling body having an annular or tubular chamber defined by a passage wall and an outer wall is known e.g. from WO 2006/135227 of the same applicant. The circumferential sealing ring groove with the sealing ring is in this embodiment provided in the passage wall of the coupling body.

A disadvantage of such known pipe joint structure structures is that when the spigot end of a pipe has not been properly chamfered, or not been properly calibrated or been properly cut off at a right angle, there is a risk that the sealing ring is pushed out of the circumferential sealing ring groove and leakage occurs.

A solution to this problem is formed by a mobile compression ring provided adjacent to the sealing ring, at least a portion of which extends between the circumferential sealing ring groove and the end edge, the mobile compression ring comprising an abutment for the spigot end. The spigot end of a pipe while being accommodated into the socket member will initially abut the abutment of the mobile compression ring, and push the mobile compression ring forwards into the socket member. The mobile compression ring compresses the sealing ring before the end of the spigot end comes into contact with the sealing ring. Only the smooth wall of the spigot will come into contact with the sealing ring when providing the sealing connection.

Such a solution is presented e.g. in EP 1 475 562. The shown socket member is formed by a fitting which is intended for accommodating a conduit. The fitting includes a radial circumferential sealing ring groove for a sealing element formed by a wider section of the fitting. In the departure state, before the conduit is accommodated in the fitting, the sealing element is compressed in the area between the wider section of the fitting by a rigid mobile compression ring. The mobile compression ring having an inward-extending collar forming an abutment is provided adjacent to the sealing ring. When the conduit is pushed into the fitting, the conduit abuts the inward-extending collar and subsequently pushes the mobile compression ring into the fitting and removes the mobile compression ring from its position adjacent to the sealing element. Thereby the sealing element expands from the highly compressed state adjacent to the mobile compression ring to a less compressed sealing state to seal the joint between the fitting and the conduit.

An alternative solution is presented e.g. in DE 100 65 225. The socket is formed by a coupling body having a tubular chamber defined by a fitting body and a press sleeve. The socket comprises a circumferential sealing ring groove in which a sealing ring is disposed. A mobile compression ring is provided adjacent to the sealing ring, extending over the entire sealing ring from a position axially more inside the tubular chamber to a position between the sealing ring groove and the end edge of the socket member. The mobile compression ring comprises an abutment for the spigot end at an end of the mobile compression ring remote from the end edge of the socket member. According to the invention of DE 100 65 225 the mobile compression ring protects the sealing ring when a spigot end enters the tubular chamber of the socket member, until the spigot end abuts the abutment and moves the mobile compression ring until the sealing ring is in contact with the spigot end. In this situation, the sealing ring should be in a compressed state in the departure state, before accommodation of the spigot end, because it has to expand to come into contact from the mobile compression sleeve to the accommodated spigot end. In contact with the spigot end it has to be in a compressed state in order to seal properly. Hence, the mobile compression ring should have compressed the sealing ring before the spigot end was accommodated.

A disadvantage of these known systems is that the sealing ring is highly compressed between the socket member and the mobile compression ring before the spigot end is accommodated in the socket member. This generally results in deterioration of the material of the sealing ring. In general, the sealing ring should have elastic properties in order to have a proper sealing function. As a result of severe compression, in particular longstanding compression and/ or compression at high temperatures as often occurs during storage, some compression deformation may be permanent, resulting in a decrease in the elasticity of the sealing ring. This may be referred to as 'compression-set'. This will result in reduced sealing properties of the sealing ring.

DE 10321301 B3 is considered to represent the closest prior art and describes a pipe connection with a sealing member in the insertion area.

The aim of the present invention is to provide an improved pipe joint structure.

This aim is achieved by providing a pipe joint structure according to the preamble of claim 1, **characterised in that** the abutment of the mobile compression ring is positioned at a side of the mobile compression ring facing the end edge of the socket member, such that the mobile compression ring is positioned in front of the spigot end during accommodation and when the spigot end has been accommodated in the socket member; and in that in the departure state the mobile compression ring does not compress the sealing ring further than the compressed sealing state.

When the abutment of the mobile compression ring is positioned at a side of the mobile compression ring facing the end edge of the socket member, it is accomplished that the spigot end will contact the mobile compression ring before contacting the sealing ring. Both during accommodation and when the spigot end has been accommodated in the socket member the mobile compression ring is positioned in front of the spigot end. As a result, no portion of the mobile compression ring is positioned between the spigot end and the wall of the socket member in which the circumferential sealing ring groove is provided. This enables the use of socket members having a smaller diameter, better fit to the diameter of the spigot end. It also prevents a situation in which the mobile compression ring is temporarily positioned between the sealing ring and the spigot end, in which situation the sealing ring needs to be compressed beyond the compressed sealing state in which it seals the joint between the socket member and the socket end.

According to the invention, the mobile compression ring has a rigidity such that it is capable of compressing the sealing ring from a departure state before the spigot end is accommodated in the socket member to the compressed sealing state during accommodation of the spigot end in the socket member, whereby in the departure state the mobile compression ring does not compress the sealing ring further than the compressed sealing state. With the mobile compression ring compressing the sealing ring instead of the spigot end, there is no risk that the sealing ring is pushed out of the circumferential sealing ring groove by a spigot end. With the configuration in which the mobile compression ring has such material properties that it can compress the sealing ring when it is pushed forwards by the spigot end, it is no longer necessary to store a pipe joint structure with the sealing ring in a highly compressed state, compressed by a mobile compression ring as is the disadvantage of EP 1 475 562 and DE 100 65 225. The mobile compression ring itself is axially pushed further away from the end edge of the socket member. An advantage of this invention is that the axial length of the mobile compression ring can be small as it does not have to compress the sealing ring in the circumferential groove during storage.

Preferably, the mobile compression ring is made undivided as a single piece. Alternatively, the mobile compression ring may be composed of multiple interconnected fragments. The mobile compression ring may e.g. be ring-shaped, or cylindrical. Preferably, the edge of the mobile compression ring adjacent to the sealing ring is designed conical, more preferably designed as the socket end described in WO 2006/028365 of the same applicant. The portion of the mobile compression ring adjacent to the sealing ring during compression of the sealing ring is preferably designed with a curvature, preferably corresponding with the curvature of the sealing ring or with a larger radius.

Preferably, the axial length of the mobile compression ring is less than the length of the groove to reduce the disadvantage of a large redundant part of the pipe joint structure once the spigot end is accommodated in the socket member. The abutment of the mobile compression ring is preferably designed such that it can easily be abutted, and subsequently pushed forwards, by a spigot end. Alternatively, the mobile compression ring may comprise an inward-extending collar for the spigot end to abut and push forward.

The mobile compression ring may be provided clamped fit, both when it is provided radially more outwards and when it is provided radially more inwards than the sealing ring. In this case, the sealing ring may be slightly compressed. Preferably, the mobile compression ring only contacts a portion of the sealing ring. Alternatively, both when the mobile compression ring is positioned radially more outwards or inwards than the sealing ring, the mobile compression ring may be connected to the socket member or the sealing ring with a very weak connection, which is immediately broken when the spigot end is accommodated in the socket member. Alternatively, a portion of the mobile compression ring may be weakly fixed in the circumferential sealing ring groove, axially more outwards than the sealing ring, such that the mobile compression ring is easily removed from the circumferential sealing ring groove when the spigot end is accommodated in the socket member.

The mobile compression ring may be rigid or relatively elastic, but should not be that flexible that it is no longer capable of compressing the sealing ring. With a relatively rigid mobile compression ring, e.g. with a relatively long cylindrical mobile compression ring, or with a mobile compression ring made of a stiff material, the entire mobile compression ring is pushed forwards, past the sealing ring, upon the first interaction of the spigot end with the mobile compression ring. This may be disadvantageous in cases where the spigot end has not been properly chamfered , or not been properly calibrated or cut off at a right angle, since then the mobile compression ring may be pushed past the sealing ring before the entire spigot end adjoins the sealing ring around the full contour. This will occur when the axial profile variations of the spigot end are larger than the length of the mobile compression ring.

Preferably, the mobile compression ring is flexible. More preferably, the ring has an axial flexibility or a play. Such flexibility may allow that portions of the mobile compression ring to be at deviating axial positions with respect to the socket member during accommodation and when the spigot end has been accommodated in the socket member. A relatively flexible mobile compression ring may pass the sealing ring at successive locations, depending on the axial profile of the spigot end. Thereby, the risk that the sealing ring is pushed out of the circumferential sealing ring groove and leakage occurs is diminished further. Hence, a flexible compression ring enables the accommodation of imperfect spigot ends. Part of the spigot end extending axially more outwards will primarily contact the mobile compression ring, and thereby push a portion of the mobile compression ring forwards. A portion the mobile compression ring may be pushed beyond, and removed from, the sealing ring providing a sealing connection for the axially more outwards portion of the spigot end. Another portion of the mobile compression ring is pushed forward by a portion of the spigot end extending axially more inwards, and will be pushed beyond the sealing ring later. This requires a preferred degree of elasticity or play of the mobile compression ring.

The socket member of the pipe joint structure according to the invention can be any member suitable for accommodating a spigot end of a pipe, and can be positioned on any type of base.

In a preferred embodiment, the socket member is formed at the end of a pipe. Preferably, the circumferential sealing ring groove with the sealing ring is provided near the pipe end edge at the inner pipe wall, and the mobile compression ring is provided extending radially more inwards than the sealing ring. Upon joining a spigot end to the pipe end, the mobile compression ring is pushed axially inwards the pipe end, over the sealing ring, such that when the pipe joint structure is accomplished, the sealing ring seals the joint between the pipe end and the spigot end. The mobile compression ring is pushed further into the pipe end.

In an alternative embodiment according to the invention, the socket member is formed by a pipe fitting having an annular or tubular chamber formed by a passage wall and an outer sleeve, such as disclosed in WO 2006/135227. The spigot end is fitted in this annular chamber. The circumferential sealing ring groove with the sealing ring may either be provided at the outer sleeve, or at the passage wall.

Analogously, the socket member may be formed as a tubular support which fits inside a pipe for use in a press fitting such as shown e.g. in DE 20 2004 011 236. The circumferential sealing ring groove, the sealing ring and the mobile compression ring are in this embodiment provided at the outer wall of the tubular support, over which the spigot end of a pipe is pushed. The connection is finalized by sliding a sleeve over the pipe.

When the sealing ring is provided at the passage wall, the mobile compression ring is provided radially more outwards than the sealing ring. If the sealing ring is provided at the outer wall, the mobile compression ring is provided radially more inwards than the sealing ring. Both when the sealing ring is provided at the passage wall or the outer wall of the pipe coupling, the fitting may be designed such that when the spigot end is joined to the pipe coupling the mobile compression ring is fixed between the spigot end and the passage wall or the outer mobile compression ring, respectively. In an alternative embodiment, the mobile compression ring is pushed in the pipe coupling in the annular chamber delimited by the radially outer wall, the passage wall and the sealing ring. In this chamber, the mobile compression ring does no longer interact with the joint at all and is left there as redundant material.

The invention is further explained with reference to the drawings, in which:
figs. 1 a and 1 b are a schematic representation of a first embodiment of a pipe joint structure according to the invention;
fig. 2 is a schematic representation of a second embodiment of a pipe joint structure according to the invention;
figs. 3a and 3b are a schematic representation of a third embodiment of a pipe joint structure according to the invention;
fig. 4 is a schematic representation of a fourth embodiment of a pipe joint structure according to the invention;
fig. 5 is a schematic representation of an alternative embodiment of a pipe joint structure according to the invention;
figs. 6a-6c show a detail of a schematic representation of alternative embodiments of a pipe joint structure according to the invention.

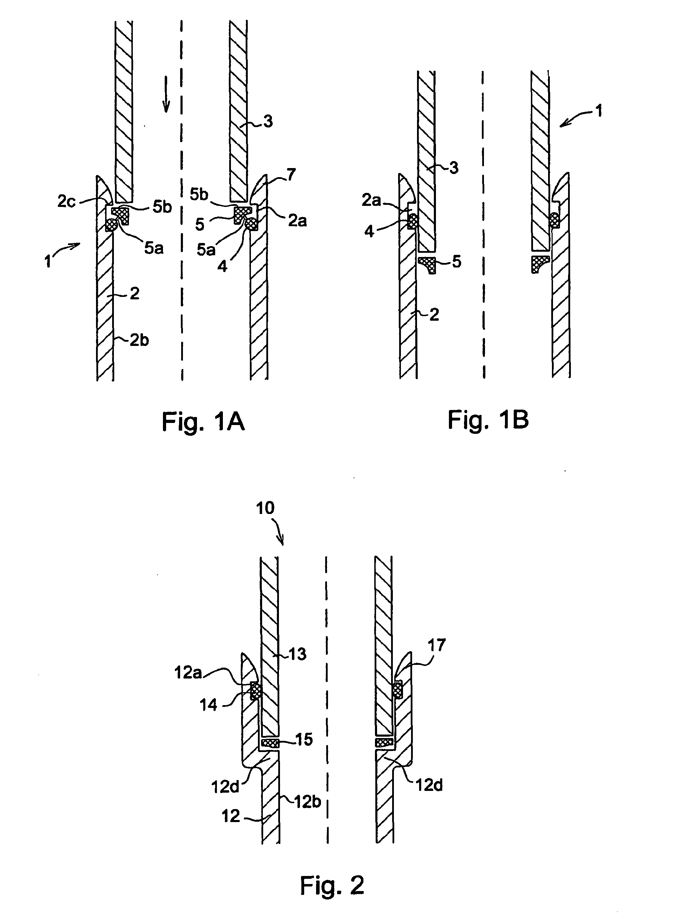

In figs. 1a and 1b a first embodiment of a pipe joint structure 1 is schematically shown in cross section. The pipe joint structure 1 comprises a socket member 2 formed by a pipe section end portion which is intended for accommodating a spigot end 3 of another pipe. The socket member 2 can be provided at the end of a pipe, but alternatively at a special element to which a spigot end of a pipe is to be coupled. The socket member 2 comprises and end edge 7 and includes a radial circumferential sealing ring groove 2a, provided in an inner wall 2b of the socket member. A sealing ring 4 is partly disposed in the circumferential sealing ring groove 2a. In the departure state shown in fig. 1a, before the spigot end 3 is accommodated in the socket member 2, the sealing ring 4 is in a non-compressed state and extends from the groove well beyond the inner wall 2b. A mobile compression ring 5 is provided adjacent to the sealing ring 4, positioned axially more outwards than the sealing ring 4, partly between the circumferential sealing ring groove 2a and the end edge 7. In the shown embodiment, the mobile compression ring 5 is made as a single piece, and placed in the circumferential sealing ring groove 2a being connected to the sealing ring 4 with a very weak connection 5a. Alternatively, the mobile compression ring 5 is clamped between the axial outer end of the sealing ring groove 2c and the sealing ring 4, via part of the compression ring 5 extending in the groove 2a beyond the inner wall 2b.

Upon accommodation of the spigot end 3 in the socket member 2, the spigot end 3 first contacts the mobile compression ring 5 by abutting the abutment 5b. Abutment 5b is, according to the invention, positioned at a side of the mobile compression ring 5 facing the end edge 7. The mobile compression ring 5 is pressed into the socket member 2, being positioned in front of the spigot end 3 during accommodation of the spigot end 3. As a result of its rigidity, the mobile compression ring 5 compresses the sealing ring 4 while being pushed forward, from the non-compressed departure state (shown in fig. 1 a) to the compressed sealing state as shown in fig. 1 b.

In the shown embodiment, the portion 5c of the mobile compression ring adjacent to the sealing ring 4 during compression of the sealing ring is designed with a curvature, corresponding with the curvature of the sealing ring. In fig. 1b the situation in which the spigot end 3 is accommodated in the socket member 2 is shown. In this situation, the sealing ring 4 is in a compressed sealing state to seal the joint between the socket member 2 and the spigot end 3. The mobile compression ring 5 is pressed into the socket member 2, and will remain there as an obstacle, which may be removed (if the socket member structure allows such).

In fig. 2 an alternative embodiment of a pipe joint structure 10 according to the invention is shown. A spigot end 13 similar to that shown in fig. 1 has been accommodated in an alternative socket member 12. The socket member 12 may also be formed by an end of a pipe or integrated with any other type of base member that is to be connected to the spigot end 13. Analogously to socket member 2 shown in fig. 1, socket member 12 comprises an end edge 17 and an inner wall 12b in which a circumferential sealing ring groove 12a is provided. In sealing groove 12a a sealing ring 14 is disposed, which in the shown situation in which the spigot end 13 is accommodated in the socket member 12 is in a compressed sealing state to so as to provide a proper sealing between the socket member 12 and the spigot end 13. A mobile compression ring 15 was placed adjacent to the sealing ring between the circumferential sealing ring groove 12a and the end edge 17 before accommodating the spigot end 13. In the situation shown in fig. 2, the spigot end 13 is accommodated in the socket member 12, and has thereby pushed the mobile compression ring 15 past the sealing ring 14, until a curvature 12b in the socket member 12 forming a stop surface against which the mobile compression ring 15 is abutted by the spigot end 13. This design of the socket member 12 is such that the mobile compression ring 15 remains in the joint after accommodation of the spigot end 13 into the socket member 12.

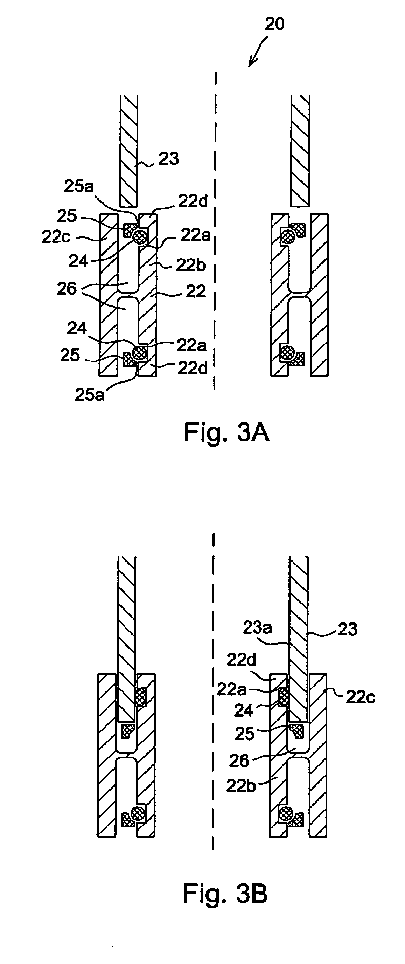

Yet an alternative embodiment of a pipe joint structure 20 according to the invention is shown in figs. 3a and 3b. The socket member 22 shown in this embodiment is formed by a pipe fitting 22 having upper and lower annular or tubular chambers 26 formed by a passage wall 22b and an outer wall 22c, adapted for accommodating a spigot end 23 of a pipe. The outer wall 22c may also be formed as an outer sleeve such as shown e.g. in WO 2006/135227. In the embodiment shown, the fitting is made as a single piece in which the passage wall 22b and the outer wall 22c are interconnected. Alternatively, the spigot end may be placed over the passage wall 22b after which an outer wall part is placed over the spigot end. The pipe fitting 22 as shown in fig. 3 is designed symmetrically to accommodate spigot ends of two pipes that are in line with each other.

In fig. 3a the spigot end 23 has not been accommodated yet. The pipe fitting 22 comprises circumferential sealing ring grooves 22a in the passage walls 22b of the fitting 22. In the circumferential sealing ring grooves 22a annular sealing rings 24 are partly provided. In the shown departure state, before accommodation of the spigot end 23, the sealing rings 24 are not compressed. Annular mobile compression rings 25 are provided adjacent to the sealing rings 24, and are connected to the pipe fitting 22 via a weak connection 25a. The annular compression rings 25 extend between the circumferential sealing ring groove and end edges 22d of the pipe fitting 22.

Upon accommodation of the spigot end 23, as shown in fig. 3b in the upper portion of pipe fitting 22, the sealing ring 24 has been compressed by the mobile compression ring 25 in the circumferential sealing ring groove 22a, such that the smooth inner side 23a of the spigot end 23 is in contact with the sealing ring 25. In this way, a seal is provided between the spigot end 23 and the socket member 22. Mobile compression ring 25 is pushed forwards in the chamber 26 by the spigot end 23. The mobile compression ring 25 has no function in the accomplished pipe joint structure.

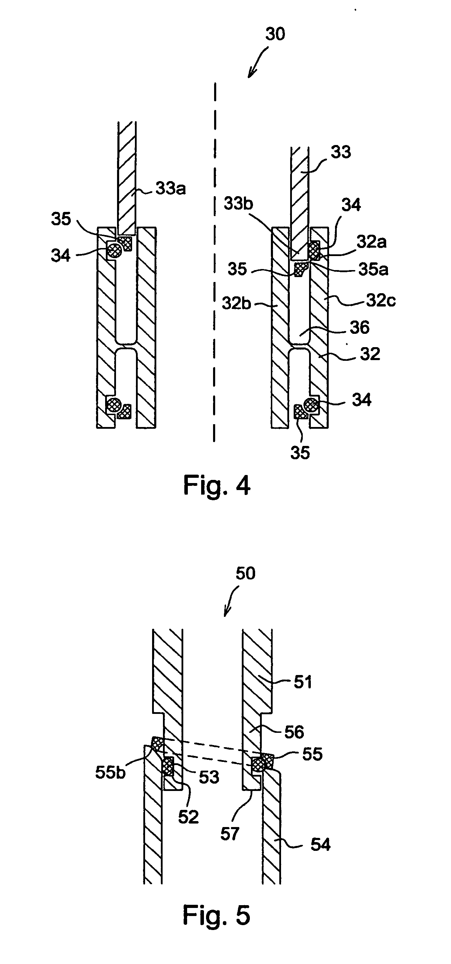

In fig. 4 yet an alternative embodiment of a pipe joint structure 30 according to the invention is shown. A spigot end 33 has been partly accommodated in a socket member 32 formed by a pipe coupling suitable for coupling two pipes. Circumferential sealing ring grooves 32a are formed in an outer wall 32c of the socket member 32, while the spigot end 33 is accommodated in an annular chamber 36 delimited both by the outer wall 32c and a passage wall 32b. In circumferential sealing ring grooves 32a sealing rings 34 are provided. Before accommodating the spigot end 33 the sealing rings 34 are slightly compressed by an adjacent to mobile compression ring 35. In the departure state, before accommodating the spigot end 33, the compression ring 35 is provided press-fit over part of the sealing ring 34, thereby compressing the sealing ring 34, but not as much as in the compressed sealing state, which is the state when the sealing ring seals an assemble spigot end and socket member.

In the embodiment shown in fig. 4, the spigot end 33 does not have a straight edge. The spigot end edge 33b shown at the right-hand side of the cross section of fig. 4 has already made contact with the abutment 35a of the mobile compression ring 35 and pushed the right-hand portion of the mobile compression ring 35 beyond the sealing ring 34 and the circumferential sealing ring groove 32a, while the spigot end edge 33a shown at the left-hand side of the cross section of fig. 4 has not yet contacted the mobile compression ring 35. As a result of the flexibility of the shown mobile compression ring 35, the mobile compression ring 35 is deformed. Such elastic properties of the mobile compression ring 35 are beneficial in case of uneven spigot end parts.

In fig. 5 parts of an alternative fitting design is shown. The pipe joint structure 50 comprises a socket 51 with a channel wall 56 and an end edge 57. In the channel wall 56 a circumferential sealing groove 52 is provided in which a sealing ring 53 is positioned.

Before accommodation of the spigot end 54, a mobile compression ring 55 was positioned adjacent to the sealing ring 53. The mobile compression ring 55 does not compress or only slightly compresses the sealing ring. At least a portion of the mobile compression ring 55 extended between the circumferential sealing ring groove 52 and the end edge 57 (not visible in fig. 5). The mobile compression ring 55 comprises an abutment 55b for the spigot end 54. The abutment 55b of the mobile compression ring 55 is positioned before accommodation of the spigot end 54 at a side of the mobile compression ring 55 facing the end edge 57 of the socket member 51, such that the mobile compression ring 55 is positioned in front of the spigot end 54 during accommodation.

The spigot end 54 has been poorly prepared and has an edge that is not straight. In the situation shown in fig. 5, part of the mobile compression ring 55 shown in the left part of the drawing has been pushed above by the spigot end 54 such that part of the sealing ring 53 shown on the left-hand side of the drawing is in a compressed sealing state to seal the joint between the socket member 51 and the spigot end 54. The sealing ring 53 shown in the right-hand side of the drawing is still in a less compressed or non-compressed state. The mobile compression ring 55 is still adjacent to the sealing ring 53, the spigot end 54 just abutting the abutment 55b of the mobile compression ring.

The mobile compression ring 55 has been designed with such a radial rigidity that it will sit on the sealing ring 53 before accommodation of the fitting on the spigot and that it is capable of compressing the sealing ring 53 from a departure state before the spigot end 54 is accommodated in the socket member 51 (shown in the right-hand side of the drawing) to the compressed sealing state after accommodation of the spigot end 54 in the socket member 51 (shown in the left-hand side of the drawing).

Furthermore, the mobile compression ring 55 shown in this embodiment has an axial flexibility such that portions of the mobile compression ring 55 are allowed to be at deviating axial positions with respect to the socket member 54, as shown in fig. 5. The mobile compression ring 55 is locally (left-hand side) pushed deeper into the socket 51 (upwards in the drawing) by that part of the spigot 54 (the left part in the drawing) that meets the compression ring 55 first. In this case the mobile compression ring 55 is allowed to obtain an oval shape by stretching portions of the ring 55 perpendicular to the plane of the compression ring 55. Subsequently, the compression ring 55 is allowed to move as a whole axially deeper into the socket 51.

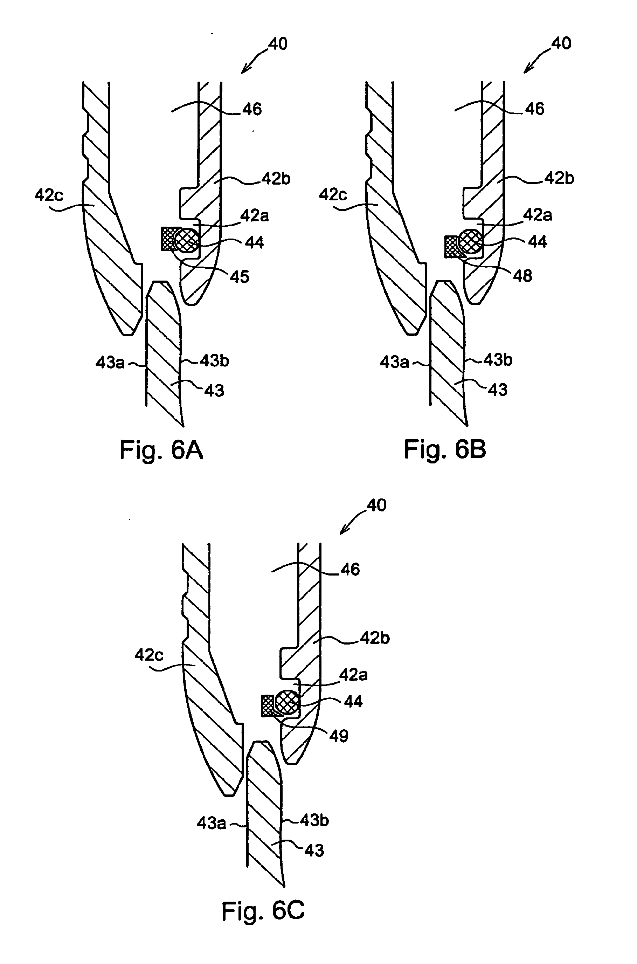

In figs. 6a-c a detail of yet another pipe joint structure 40 capable of accommodating a spigot end 43 is shown. All figs. 6a-6c show the a similar pipe joint structure 40 comprising a socket member 42 formed by a pipe coupling having an annular chamber 46 delimited by an outer wall 42c and an inner passage wall 42b. In the inner passage wall 42b a circumferential sealing ring groove 42a is provided, in which a sealing ring 44 is provided. Adjacent to the sealing ring 44, a mobile compression ring is provided with a shape that is complementary to that of the sealing ring and is thereby kept in place. Figs. 6a, 6b and 6c show alternative mobile compression rings 45, 48 and 49 respectively.

## Claims

1. Pipe joint structure (1, 10, 20, 30, 40, 50) comprising:
- a socket member (2, 12, 22, 32, 42, 51) with an end edge (7, 17, 57) which is adapted for accommodating a spigot end (3, 13, 23, 33, 43) of a pipe, the socket member (2, 12, 22, 32, 42, 51) including a wall in which a circumferential sealing ring groove (2a, 12a, 22a, 32a, 42a, 52) is provided,
- a sealing ring (4, 14, 24, 34, 44, 53) at least partly disposed in the circumferential sealing ring groove (2a, 12a, 22a, 32a, 42a, 52) which, when the spigot end (3, 13, 23, 33, 43)has been accommodated in the socket member(2, 12, 22, 32, 42, 51), is in a compressed sealing state to seal the joint between the socket member (2, 12, 22, 32, 42, 51) and the spigot end (3, 13, 23, 33, 43),
- a mobile compression ring (5, 15, 25, 35, 45, 55) provided adjacent to the sealing ring (4, 14, 24, 34, 44, 53), the mobile compression ring (5, 15, 25, 35, 45, 55) comprising an abutment (5b, 55b) for the spigot end (3, 13, 23, 33, 43),
- wherein the mobile compression ring (5, 15, 25, 35, 45, 55) has a radial rigidity such that it is capable of compressing the sealing ring (4, 14, 24, 34, 44, 53) from a departure state before the spigot end (3, 13, 23, 33, 43)is accommodated in the socket member (2, 12, 22, 32, 42, 51) to the compressed sealing state during accommodation of the spigot end (3, 13, 23, 33, 43) in the socket member(2, 12, 22, 32, 42, 51);
**characterized in that**
- the abutment (5b, 55b) of the mobile compression ring (5, 15, 25, 35, 45, 55) is positioned at a side of the mobile compression ring (5, 15, 25, 35, 45, 55) facing the end edge (7, 17,, 57) of the socket member (2, 12, 22, 32, 42, 51), such that the mobile compression ring (5, 15, 25, 35, 45, 55) is positioned in front of the spigot end (3, 13, 23, 33, 43) during accommodation and when the spigot end (3, 13, 23, 33, 43) has been accommodated in the socket member (2, 12, 22, 32, 42, 51); and **in that**
- in the departure state the mobile compression ring (5, 15, 25, 35, 45, 55) does not compress the sealing ring (4, 14, 24, 34, 44, 53) further than the compressed sealing state.

2. Pipe joint structure (1, 10, 20, 30, 40, 50) according to claim 1, wherein the mobile compression ring (5, 15, 25, 35, 45, 55) has an axial flexibility such that portions of the mobile compression ring (5, 15, 25, 35, 45, 55) may be at deviating axial positions with respect to the socket member (2, 12, 22, 32, 42, 51) during accommodation and when the spigot end (3, 13, 23, 33, 43) has been accommodated in the socket member (2, 12, 22, 32, 42, 51).

3. Pipe joint structure (1, 10, 20, 30, 40, 50) according to claim 1, wherein the mobile compression ring (5, 15, 25, 35, 45, 55) has an axial play such that portions of the mobile compression ring (5, 15, 25, 35, 45, 55) may be at deviating axial positions with respect to the socket member (2, 12, 22, 32, 42, 51) during accommodation and when the spigot end (3, 13, 23, 33, 43) has been accommodated in the socket member (2, 12, 22, 32, 42, 51).

4. Pipe joint structure (1, 10, 20, 30, 40, 50) according to claim 1, wherein the mobile compression ring (5, 15, 25, 35, 45, 55) is made as a single piece.

5. Pipe joint structure (1, 10, 20, 30, 40, 50) according to claim 1, wherein the mobile compression ring (5, 15, 25, 35, 45, 55) is connected to the socket member (2, 12, 22, 32, 42, 51) with a very weak connection.

6. Pipe joint structure (1, 10, 20, 30, 40, 50) according to claim 4, wherein the mobile compression ring (5, 15, 25, 35, 45, 55) is connected to the circumferential sealing ring groove (2a, 12a, 22a, 32a, 42a, 52) with a very weak connection.

7. Pipe joint structure (1, 10, 20, 30, 40, 50) according to claim 1, wherein the mobile compression ring (5, 15, 25, 35, 45, 55) is connected to the sealing ring (4, 14, 24, 34, 44, 53) with a very weak connection.

8. Pipe joint structure (1, 10, 20, 30, 40, 50) according to claim 1, wherein the mobile compression ring (5, 15, 25, 35, 45, 55) is provided clamp fit between the sealing ring (4, 14, 24, 34, 44, 53) and the sealing ring groove (2a, 12a, 22a, 32a, 42a, 52) in a position axially more outwards than the sealing ring (4, 14, 24, 34, 44, 53).

9. Pipe joint structure (1, 10, 20, 30, 40, 50) according to claim 1, wherein the socket member (2, 12, 22, 32, 42, 51) is formed at the end of a pipe.

10. Pipe joint structure (1, 10, 20, 30, 40, 50) according to claim 1, wherein the socket member (2, 12, 22, 32, 42, 51) is formed by a pipe fitting having an annular chamber (2b, 3b) formed by a passage wall (22b, 32b) and an outer wall (22c, 32c).

11. Pipe joint structure (1, 10, 20, 30, 40, 50) according to claim 9, wherein the circumferential sealing ring groove (2a, 12a, 22a, 32a, 42a, 52) is provided in the passage wall (22b, 32b) and the mobile compression ring (5, 15, 25, 35, 45. 55) is provided clamp fit radially more outwards than the sealing ring (4, 14, 24, 34, 44, 53), thereby slightly compressing the sealing ring (4, 14, 24, 34, 44, 53).

12. Pipe joint structure (1, 10, 20, 30, 40, 50) according to claim 1, wherein the mobile compression ring (5, 15, 25, 35, 45, 55) compresses the sealing ring (4, 14, 24, 34, 44, 53) in the departure state 5-10%.

13. Pipe joint structure (1, 10, 20, 30, 40, 50) according to claim 1, wherein the sealing ring (4, 14, 24, 34, 44, 53) in the compressed sealing state is compressed 10-30%, more preferably 15-25%.

14. Pipe joint structure (1, 10, 20, 30, 40) according to any one of the previous claims, wherein at least a portion of the mobile compression ring (5, 15, 25, 35, 45) extends between the circumferential ring groove (2a, 12a, 22a, 32a, 42a) and the end edge (7, 17).

## Patentansprüche

1. Rohrverbindungsstruktur (1, 10, 20, 30, 40, 50), umfassend:
- ein Buchsenelement (2, 12, 22, 32, 42, 51) mit einer Endkante (7, 17, 57), welche zum Aufnehmen eines Zapfenendes (3, 13, 23, 33, 43) eines Rohrs eingerichtet ist, wobei das Buchsenelement (2, 12, 22, 32, 42, 51) eine Wand umfasst, in welcher eine Umfangsdichtringnut (2a, 12a, 22a, 32, 42a, 52) vorgesehen ist,
- einen Dichtring (4, 14, 24, 34, 44, 53), der zumindest teilweise in der Umfangsdichtringnut (2a, 12a, 22a, 32, 42a, 52) angeordnet ist, welche, wenn das Zapfenende (3, 13, 23, 33, 43) in dem Buchsenelement (2, 12, 22, 32, 42, 51) aufgenommen ist, in einem komprimierten Dichtzustand ist, so dass die Verbindung zwischen dem Buchsenelement (2, 12, 22, 32, 42, 51) und dem Zapfenende (3, 13, 23, 33, 43) abgedichtet ist,
- einen bewegbaren Kompressionsring (5, 15, 25, 35, 45, 55), der benachbart zu dem Dichtring (4, 14, 24, 34, 44, 53) vorgesehen ist, wobei der bewegbare Kompressionsring (5, 15, 25, 35, 45, 55) einen Anschlag (5b, 55b) für das Zapfenende (3, 13, 23, 33, 43) umfasst,
- bei der der bewegbare Kompressionsring (5, 15, 25, 35, 45, 55) eine solche radiale Steifigkeit aufweist, dass er geeignet ist den Dichtring (4, 14, 24, 34, 44, 53) von einem Startzustand, bevor das Zapfenende (3, 13, 23, 33, 43) in dem Buchsenelement (2, 12, 22, 32, 42, 51) aufgenommen ist, in einen komprimierten Dichtzustand während dem Aufnehmen des Zapfenendes (3, 13, 23, 33, 43) in dem Buchsenelement (2, 12, 22, 32, 42, 51) zu komprimieren;
**gekennzeichnet dadurch, dass**
- der Anschlag (5b, 55b) des bewegbaren Kompressionsrings (5, 15, 25, 35, 45, 55) an einer Seite des bewegbaren Kompressionsrings (5, 15, 25, 35, 45, 55) positioniert ist, die auf die Endkante (7, 17, 57) des Buchsenelements (2, 12, 22, 32, 42, 51) gerichtet ist, so dass der bewegbare Kompressionsring (5, 15, 25, 35, 45, 55) an der Vorderseite des Zapfenendes (3, 13, 23, 33, 43) positioniert ist, während der Aufnahme und wenn das Zapfenende (3, 13, 23, 33, 43) in dem Buchsenelement (2, 12, 22, 32, 42, 51) aufgenommen ist; und dadurch**,** dass
- in dem Startzustand der bewegbare Kompressionsring (5, 15, 25, 35, 45, 55) den Dichtring (4, 14, 24, 34, 44, 53) nicht weiter als in den komprimierten Dichtzustand komprimiert.

2. Rohrverbindungsstruktur (1, 10, 20, 30, 40, 50) nach Anspruch 1, bei der der bewegbare Kompressionsring (5, 15, 25, 35, 45, 55) eine solche axiale Flexibilität aufweist, dass Abschnitte des bewegbaren Kompressionsrings (5, 15, 25, 35, 45, 55) in Bezug auf das Buchsenelement (2, 12, 22, 32, 42, 51) während der Aufnahme und wenn das Zapfenende (3, 13, 23, 33, 43) in dem Buchsenelement (2, 12, 22, 32, 42, 51) aufgenommen ist an versetzten Axialpositionen sein können.

3. Rohrverbindungsstruktur (1, 10, 20, 30, 40, 50) nach Anspruch 1, bei der der bewegbare Kompressionsring (5, 15, 25, 35, 45, 55) ein solches Axialspiel aufweist, dass Abschnitte des bewegbaren Kompressionsrings (5, 15, 25, 35, 45, 55) in Bezug auf das Buchsenelement (2, 12, 22, 32, 42, 51) während der Aufnahme und wenn das Zapfenende (3, 13, 23, 33, 43) in dem Buchsenelement (2, 12, 22, 32, 42, 51) aufgenommen ist an versetzten Axialpositionen sein können.

4. Rohrverbindungsstruktur (1, 10, 20, 30, 40, 50) nach Anspruch 1, bei der der bewegbare Kompressionsring (5, 15, 25, 35, 45, 55) als ein einzelnes Teil ausgebildet ist.

5. Rohrverbindungsstruktur (1, 10, 20, 30, 40, 50) nach Anspruch 1, bei der der bewegbare Kompressionsring (5, 15, 25, 35, 45, 55) mit dem Buchsenelement (2, 12, 22, 32, 42, 51) mit einer sehr schwachen Verbindung verbunden ist.

6. Rohrverbindungsstruktur (1, 10, 20, 30, 40, 50) nach Anspruch 4, bei der der bewegbare Kompressionsring (5, 15, 25, 35, 45, 55) mit der Umfangsdichtringnut (2a, 12a, 22a, 32, 42a, 52) mit einer sehr schwachen Verbindung verbunden ist.

7. Rohrverbindungsstruktur (1, 10, 20, 30, 40, 50) nach Anspruch 1, bei der der bewegbare Kompressionsring (5, 15, 25, 35, 45, 55) mit dem Dichtring (4, 14, 24, 34, 44, 53) mit einer sehr schwachen Verbindung verbunden ist.

8. Rohrverbindungsstruktur (1, 10, 20, 30, 40, 50) nach Anspruch 1, bei der der bewegbare Kompressionsring (5, 15, 25, 35, 45, 55) mit einer Klemmpassung zwischen dem Dichtring (4, 14, 24, 34, 44, 53) und der Dichtringnut (2a, 12a, 22a, 32, 42a, 52) versehen ist, in einer Position weiter axial auswärts als der Dichtring (4, 14, 24, 34, 44, 53).

9. Rohrverbindungsstruktur (1, 10, 20, 30, 40, 50) nach Anspruch 1, bei der das Buchsenelement (2, 12, 22, 32, 42, 51) als das Ende eines Rohrs ausgebildet ist.

10. Rohrverbindungsstruktur (1, 10, 20, 30, 40, 50) nach Anspruch 1, bei der das Buchsenelement (2, 12, 22, 32, 42, 51) durch eine Rohrbefestigung ausgebildet ist, die eine kreisrunde Kammer (2b, 3b) aufweist, die durch eine Durchgangswand (22b, 32b) und eine äußere Wand (22c, 32c) ausgebildet ist.

11. Rohrverbindungsstruktur (1, 10, 20, 30, 40, 50) nach Anspruch 9, bei der die Umfangsdichtringnut (2a, 12a, 22a, 32, 42a, 52) in der Durchgangswand (22b, 32b) ausgebildet ist und der bewegbare Kompressionsring (5, 15, 25, 35, 45, 55) mit einer Klemmpassung weiter radial auswärts versehen ist, als der Dichtring (4, 14, 24, 34, 44, 53), wobei dabei der Dichtring (4, 14, 24, 34, 44, 53) ein wenig komprimiert ist.

12. Rohrverbindungsstruktur (1, 10, 20, 30, 40, 50) nach Anspruch 1, bei der der bewegbare Kompressionsring (5, 15, 25, 35, 45, 55) den Dichtring (4, 14, 24, 34, 44, 53) in seinem Starzustand um 5-10% komprimiert.

13. Rohrverbindungsstruktur (1, 10, 20, 30, 40, 50) nach Anspruch 1, bei der der Dichtring (4, 14, 24, 34, 44, 53) in dem komprimierten Dichtzustand um 10-30% komprimiert ist, bevorzugt 15-25%.

14. Rohrverbindungsstruktur (1, 10, 20, 30, 40) nach irgendeinem der vorhergehenden Ansprüche, bei der zumindest ein Abschnitt des bewegbaren Kompressionsrings (5, 15, 25, 35, 45) sich zwischen der Umfangsringnut (2a, 12a, 22a, 32, 42a) und der Endkante (7, 17) erstreckt.

## Revendications

1. Structure (1, 10, 20, 30, 40, 50) de raccordement pour tuyaux comprenant :
- un élément d'emboîture (2, 12, 22, 32, 42, 51) avec un bord d'extrémité (7, 17, 57) qui est adapté pour recevoir un bout mâle (3, 13, 23, 33, 43) d'un tuyau, l'élément d'emboîture (2, 12, 22, 32, 42, 51) incluant une paroi dans laquelle une rainure annulaire (2a, 12a, 22a, 32a, 42a, 52) d'étanchéité circonférentielle est prévue,
- une bague d'étanchéité (4, 14, 24, 34, 44, 53) disposée au moins partiellement dans la rainure annulaire (2a, 12a, 22a, 32a, 42a, 52) d'étanchéité circonférentielle qui, lorsque le bout mâle (3, 13, 23, 33, 43) a été reçu dans l'élément d'emboîture (2, 12, 22, 32, 42, 51), se trouve dans un état d'étanchéité comprimé pour assurer l'étanchéité du raccordement entre l'élément d'emboîture (2, 12, 22, 32, 42, 51) et le bout mâle (3, 13, 23, 33, 43),
- une bague mobile de compression (5, 15, 25, 35, 45, 55) prévue adjacente à la bague d'étanchéité (4, 14, 24, 34, 44, 53), la bague mobile de compression (5, 15, 25, 35, 45, 55) comprenant une butée (5b, 55b) pour le bout mâle (3, 13, 23, 33, 43),
- dans laquelle la bague mobile de compression (5, 15, 25, 35, 45, 55) possède une rigidité dans le sens radial telle qu'elle est capable de comprimer la bague d'étanchéité (4, 14, 24, 34, 44, 53) d'un état de départ avant réception du bout mâle (3, 13, 23, 33, 43) dans l'élément d'emboîture (2, 12, 22, 32, 42, 51) à l'état d'étanchéité comprimé pendant la réception du bout mâle (3, 13, 23, 33, 43) dans l'élément d'emboîture (2, 12, 22, 32, 42, 51) ;
**caractérisée en ce que**
- la butée (5b, 55b) de la bague mobile de compression (5, 15, 25, 35, 45, 55) est positionnée au niveau d'un côté de la bague mobile de compression (5, 15, 25, 35, 45, 55) en vis-à-vis du bord d'extrémité (7, 17, 57) de l'élément d'emboîture (2, 12, 22, 32, 42, 51), de sorte que la bague mobile de compression (5, 15, 25, 35, 45, 55) soit positionnée en face du bout mâle (3, 13, 23, 33, 43) pendant la réception et lorsque le bout mâle (3, 13, 23, 33, 43) a été reçu dans l'élément d'emboîture (2, 12, 22, 32, 42, 51) ; et **en ce que**
- dans l'état de départ la bague mobile de compression (5, 15, 25, 35, 45, 55) ne comprime pas la bague d'étanchéité (4, 14, 24, 34, 44, 53) plus que dans l'état d'étanchéité comprimé.

2. Structure (1, 10, 20, 30, 40, 50) de raccordement pour tuyaux selon la revendication 1, dans laquelle la bague mobile de compression (5, 15, 25, 35, 45, 55) possède une flexibilité dans le sens axial telle que des parties de la bague mobile de compression (5, 15, 25, 35, 45, 55) peuvent se trouver à des positions axiales qui dévient par rapport à l'élément d'emboîture (2, 12, 22, 32, 42, 51) pendant la réception et lorsque le bout mâle (3, 13, 23, 33, 43) a été reçu dans l'élément d'emboîture (2, 12, 22, 32, 42, 51).

3. Structure (1, 10, 20, 30, 40, 50) de raccordement pour tuyaux selon la revendication 1, dans laquelle la bague mobile de compression (5, 15, 25, 35, 45, 55) possède un jeu dans le sens axial tel que des parties de la bague mobile de compression (5, 15, 25, 35, 45, 55) peuvent se trouver à des positions axiales qui dévient par rapport à l'élément d'emboîture (2, 12, 22, 32, 42, 51) pendant la réception et lorsque le bout mâle (3, 13, 23, 33, 43) a été reçu dans l'élément d'emboîture (2, 12, 22, 32, 42, 51).

4. Structure (1, 10, 20, 30, 40, 50) de raccordement pour tuyaux selon la revendication 1, dans laquelle la bague mobile de compression (5, 15, 25, 35, 45, 55) est réalisée comme une pièce monobloc.

5. Structure (1, 10, 20, 30, 40, 50) de raccordement pour tuyaux selon la revendication 1, dans laquelle la bague mobile de compression (5, 15, 25, 35, 45, 55) est raccordée à l'élément d'emboîture (2, 12, 22, 32, 42, 51) par le biais d'un raccordement très lâche.

6. Structure (1, 10, 20, 30, 40, 50) de raccordement pour tuyaux selon la revendication 4, dans laquelle la bague mobile de compression (5, 15, 25, 35, 45, 55) est raccordée à la rainure annulaire (2a, 12a, 22a, 32a, 42a, 52) de la d'étanchéité circonférentielle par le biais d'un raccordement très lâche.

7. Structure (1, 10, 20, 30, 40, 50) de raccordement pour tuyaux selon la revendication 1, dans laquelle la bague mobile de compression (5, 15, 25, 35, 45, 55) est raccordée à la bague d'étanchéité (4, 14, 24, 34, 44, 53) par le biais d'un raccordement très lâche.

8. Structure (1, 10, 20, 30, 40, 50) de raccordement pour tuyaux selon la revendication 1, dans laquelle la bague mobile de compression (5, 15, 25, 35, 45, 55) est pourvue ajustée par serrage entre la bague d'étanchéité (4, 14, 24, 34, 44, 53) et la rainure annulaire d'étanchéité (2a, 12a, 22a, 32a, 42a, 52) dans une position plus sortante dans le sens axial que la bague d'étanchéité (4, 14, 24, 34, 44, 53).

9. Structure (1, 10, 20, 30, 40, 50) de raccordement pour tuyaux selon la revendication 1, dans laquelle l'élément d'emboîture (2, 12, 22, 32, 42, 51) est formé à l'extrémité d'un tuyau.

10. Structure (1, 10, 20, 30, 40, 50) de raccordement pour tuyaux selon la revendication 1, dans laquelle l'élément d'emboîture (2, 12, 22, 32, 42, 51) est formé par un raccord de tuyauterie qui a une chambre annulaire (2b, 3b) formée par une paroi de passage (22b, 32b) et une paroi extérieure (22c, 32c).

11. Structure (1, 10, 20, 30, 40, 50) de raccordement pour tuyaux selon la revendication 9, dans laquelle la rainure annulaire (2a, 12a, 22a, 32a, 42a, 52) d'étanchéité circonférentielle est pourvue dans la paroi de passage (22b, 32b) et la bague mobile de compression (5, 15, 25, 35, 45, 55) est pourvue ajustée par serrage plus sortante dans le sens radial que la bague d'étanchéité (4, 14, 24, 34, 44, 53), comprimant ainsi légèrement la bague d'étanchéité (4, 14, 24, 34, 44, 53).

12. Structure (1, 10, 20, 30, 40, 50) de raccordement pour tuyaux selon la revendication 1, dans laquelle la bague mobile de compression (5, 15, 25, 35, 45, 55) comprime la bague d'étanchéité (4, 14, 24, 34, 44, 53) dans l'état de départ à 5-10%.

13. Structure (1, 10, 20, 30, 40, 50) de raccordement pour tuyaux selon la revendication 1, dans laquelle la bague d'étanchéité (4, 14, 24, 34, 44, 53) dans l'état d'étanchéité comprimé est comprimée à 10-30 %, plus préférablement à 15-25 %.

14. Structure (1, 10, 20, 30, 40, 50) de raccordement pour tuyaux selon l'une quelconque des revendications précédentes, dans laquelle au moins une partie de la bague mobile de compression (5, 15, 25, 35, 45) s'étend entre la rainure annulaire circonférentielle (2a, 12a, 22a, 32a, 42a) et le bord d'extrémité (7, 17).
